# EUROPEAN PATENT APPLICATION

(11) **EP 4 492 743 A1**
(43) Date of publication of application: **15.01.2025**
(21) Application number: 23802539.9
(22) Date of filing: 31.03.2023
(51) Int. Cl.: H04L 27/26

(54) **COMMUNICATION METHOD, DEVICE AND STORAGE MEDIUM**

(30) Priority: 09.05.2022 CN 202210501583
(71) Applicant: ZTE Corporation, Shenzhen, Guangdong 518057 (CN)
(72) Inventor: XIA, Shuqiang, Shenzhen, Guangdong 518057 (CN); ZHANG, Di, Shenzhen, Guangdong 518057 (CN); MA, Yihua, Shenzhen, Guangdong 518057 (CN); YUAN, Zhifeng, Shenzhen, Guangdong 518057 (CN); YU, Guanghui, Shenzhen, Guangdong 518057 (CN); HU, Liujun, Shenzhen, Guangdong 518057 (CN)
(74) Representative: Aipex B.V.
(86) International application number: PCT/CN2023/085659
(87) International publication number: WO 2023/216763

(57) **Abstract**

Provided are a communication method and device and a storage medium. The communication method applied to a first communication node includes determining a first-type subcarrier set and a second-type subcarrier set, where each first-type subcarrier in the first-type subcarrier set is in a same resource block as at least one second-type subcarrier in the second-type subcarrier set, a first-type subcarrier in the first-type subcarrier set is configured for transmission of communication information and sensing information, and a second-type subcarrier in the second-type subcarrier set is configured for the transmission of the communication information; and sending the first-type subcarrier set and the second-type subcarrier set to a second communication node.

## Description

### TECHNICAL FIELD

The present application relates to the field of communications, in particular, a communication method and device and a storage medium.

### BACKGROUND

In an integrated communication and sensing system, data transmission and target sensing may be implemented by using the same time, frequency, power, and other resources. Therefore, more and more attention is paid to this system by the industry. In terms of signal characteristics, because of the significant advantages such as a good adaptive combination of orthogonal frequency-division multiplexing (OFDM) waveforms with spectral efficiency, interference suppression, and multiple-input and multiple-output (MIMO), OFDM waveforms are widely used in a 4G/5G mobile system. Additionally, since the ambiguity function of OFDM signals is in the shape of a single sharp peak with a good range resolution characteristics, the system may also effectively perform wireless sensing tasks. For the preceding two reasons, OFDM is still used as the main modulation scheme in the design of integrated communication and sensing fused waveforms.

In an OFDM-waveform-based integrated communication and sensing system, signals for sensing typically consist of multiple resource blocks that carry data for different users. Due to the varying channel environments of users, the power levels and modulation schemes of different resource blocks may differ significantly. Moreover, with changes in user service requirements and channel environments, the power allocation and modulation schemes of these resource blocks may also dynamically change. Differences in power and modulation schemes between resource blocks for different users reduce the effective correlation bandwidth of sensing signals, thereby decreasing the system's range resolution. Additionally, dynamic changes in power allocation and modulation schemes lead to dynamic changes in the effective correlation bandwidth of the sensing signals, affecting the stability of the sensing performance.

### SUMMARY

Embodiments of the present application provide a communication method. The method is applied to a first communication node and includes determining a first-type subcarrier set and a second-type subcarrier set, wherein each first-type subcarrier in the first-type subcarrier set is in a same resource block as at least one second-type subcarrier in the second-type subcarrier set, a first-type subcarrier in the first-type subcarrier set is configured for transmission of communication information and sensing information, and a second-type subcarrier in the second-type subcarrier set is configured for the transmission of the communication information; and sending the first-type subcarrier set and the second-type subcarrier set to a second communication node.

Embodiments of the present application provide a communication method. The method is applied to a second communication node and includes receiving a first-type subcarrier set and a second-type subcarrier set sent by a first communication node, where each first-type subcarrier in the first-type subcarrier set is in a same resource block as at least one second-type subcarrier in the second-type subcarrier set, the first-type subcarrier in the first-type subcarrier set is configured for transmission of communication information and sensing information, and the second-type subcarrier in the second-type subcarrier set is configured for transmission of communication information; and transmitting information according to the first-type subcarrier in the first-type subcarrier set and the second-type subcarrier in the second-type subcarrier set.

Embodiments of the present application provide a communication method. The method is applied to a first communication node and includes determining a target symbol for sending a first-type signal, where the first-type signal is an integrated communication and sensing signal; and sending the first-type signal to a second communication node by using the target symbol.

Embodiments of the present application provide a communication method. The method is applied to a second communication node and includes receiving a first-type signal sent by a first communication node by using a target symbol. The first-type signal is an integrated communication and sensing signal. The target symbol is a symbol for sending the first-type signal.

Embodiments of the present application provide an interference detection device. The device includes a memory and at least one processor. The memory is configured to store at least one program. When the at least one program is executed by the at least one processor, the at least one processor performs the method of any previous embodiment.

Embodiments of the present application provide a storage medium storing a computer program which, when executed by a processor, causes the processor to perform the method of any previous embodiment.

### BRIEF DESCRIPTION OF DRAWINGS

FIG. 1 is a flowchart of a communication method according to embodiments of the present application.
FIG. 2 is another flowchart of a communication method according to embodiments of the present application.
FIG. 3 is another flowchart of a communication method according to embodiments of the present application.
FIG. 4 is another flowchart of a communication method according to embodiments of the present application.
FIG. 5 is an allocation diagram of first-type subcarriers and second-type subcarriers according to embodiments of the present application.
FIG. 6 is another allocation diagram of the first-type subcarriers and the second-type subcarriers according to embodiments of the present application.
FIG. 7 is another allocation diagram of the first-type subcarriers and the second-type subcarriers according to embodiments of the present application.
FIG. 8 is an allocation diagram of downlink resources according to embodiments of the present application.
FIG. 9 is a diagram illustrating a 16QAM scheme according to embodiments of the present application.
FIG. 10A is an allocation diagram of target symbols according to embodiments of the present application.
FIG. 10B is another allocation diagram of the target symbols according to embodiments of the present application.
FIG. 11 is a block diagram of a communication apparatus according to embodiments of the present application.
FIG. 12 is another block diagram of a communication apparatus according to embodiments of the present application.
FIG. 13 is another block diagram of a communication apparatus according to embodiments of the present application.
FIG. 14 is another block diagram of a communication apparatus according to embodiments of the present application.
FIG. 15 is a diagram illustrating the structure of a communication device according to embodiments of the present application.

### DETAILED DESCRIPTION

Embodiments of the present application are described hereinafter in conjunction with drawings. The present application is described hereinafter in conjunction with embodiments and drawings. The examples described hereinafter are intended to explain the present application and not to limit the scope of the present application.

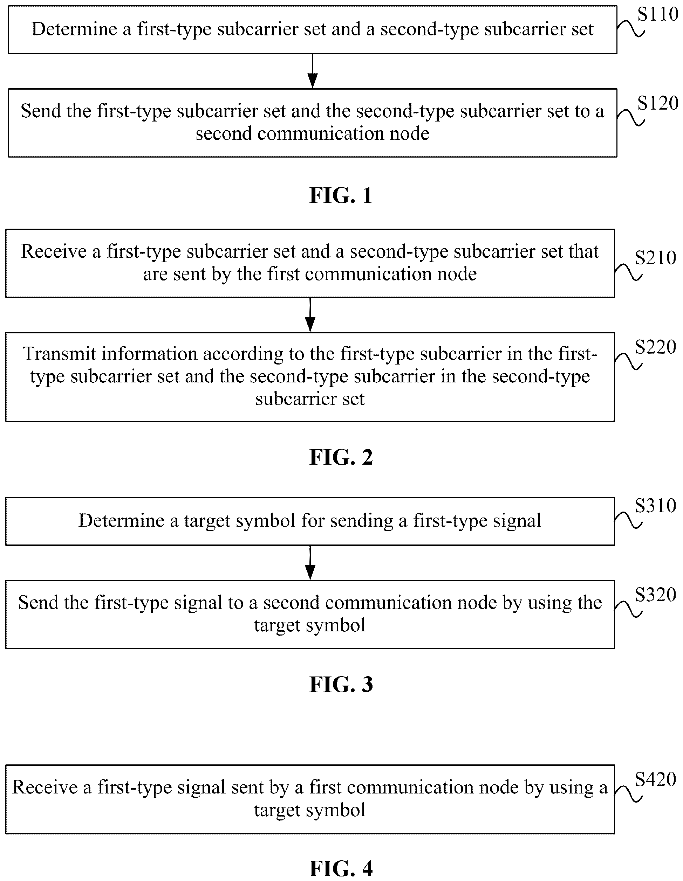

In an embodiment, FIG. 1 is a flowchart of a communication method according to embodiments of the present application. This embodiment may be implemented by a first communication node. The first communication node may be a network (for example, a base station). As shown in FIG. 1, the communication method of this embodiment includes S110 and S120.

In S110, a first-type subcarrier set and a second-type subcarrier set are determined.

Each first-type subcarrier in the first-type subcarrier set is in the same resource block as at least one second-type subcarrier in the second-type subcarrier set. The first-type subcarrier in the first-type subcarrier set is configured for transmission of communication information and sensing information. The second-type subcarrier in the second-type subcarrier set is configured for the transmission of the communication information.

In an embodiment, the first-type subcarrier set includes multiple subcarriers used for transmission of both communication information and sensing information, that is, all first-type subcarriers in the first-type subcarrier set may be used for both transmission of communication information and transmission of sensing information.

In an embodiment, the first communication node allocates the first-type subcarriers and the second-type subcarriers according to a subcarrier allocation manner, that is, determines the subcarrier index corresponding to each first-type subcarrier and the subcarrier index corresponding to each second-type subcarrier, combines the first-type subcarriers into a corresponding first-type subcarrier set, and combines the second-type subcarriers into a corresponding second-type subcarrier set.

In S120, the first-type subcarrier set and the second-type subcarrier set are sent to a second communication node.

In an embodiment, after completing allocation of the first-type subcarriers and the second-type subcarriers, the first communication node sends the first-type subcarrier set and the second-type subcarrier set to the second communication node so that the second communication node transmits communication information and sensing information by using the first-type subcarriers in the first-type subcarrier set and transmits communication information by using the second-type subcarriers in the second-type subcarrier set.

In an embodiment, each of the first-type subcarrier and the second-type subcarrier is configured to be allocated in one of the following manners: equally spaced allocation, unequally spaced allocation, or time-varying allocation. In an embodiment, the first communication node may allocate the first-type subcarriers and the second-type subcarriers in one of the following manners: equally spaced allocation, unequally spaced allocation, or time-varying allocation. The second-type subcarriers are used for only communication. In an embodiment, the equally spaced allocation means that each two adjacent first-type subcarriers are spaced by the same number of second-type subcarriers, and each two adjacent second-type subcarriers are spaced by the same number of first-type subcarriers. The unequally spaced allocation means that each two adjacent first-type subcarriers are spaced by different numbers of second-type subcarriers, and each two adjacent second-type subcarriers are spaced by different numbers of first-type subcarriers. The time-varying allocation means that different subcarriers are allocated in different slots to serve as first-type subcarriers.

In an embodiment, the first-type subcarrier set and the second-type subcarrier set are sent to the second communication node by using dedicated signaling or common signaling. In an embodiment, the first communication node may notify the second communication node of the first-type subcarrier set and the second-type subcarrier set by using the dedicated signaling or the common signaling. For example, the first communication node may send the first-type subcarrier set to the second communication node by using the dedicated signaling. Alternatively, the first communication node may send the first-type subcarrier set to the second communication node by using the common signaling. The dedicated signaling is sent by the first communication node to a second communication node, and the common signaling is sent by the first communication node to multiple second communication nodes. For example, assuming that the first-type subcarrier set includes subcarrier 0, subcarrier 3, subcarrier 6, subcarrier 9, ..., and subcarrier 99 (subcarriers 0-11 constitute resource block 1, and subcarriers 12-23 constitute resource block 2), and the first communication node allocates resource block 1 to the second communication node, then the first communication node only needs to notify the second communication node that subcarrier 0, subcarrier 3, subcarrier 6, and subcarrier 9 are the first-type subcarriers by using the dedicated signaling. If different resource blocks are allocated to different second communication nodes, the first communication node may send the indexes of all first-type subcarriers to the second communication nodes by using the common signaling. In this manner, the first communication node does not need to send a piece of dedicated signal to each second communication node to notify them of the corresponding first-type subcarrier set.

In an embodiment, for any of the first-type subcarriers, in response to a first-type subcarrier carrying communication information, the method applied to the first communication node also includes sending a power parameter of the first-type subcarriers to the second communication node by using dedicated signaling or common signaling. The power parameter is less than a preset power parameter threshold. In an embodiment, the power parameter indicates the difference value between powers corresponding to two first-type subcarriers. In an embodiment, the power parameter includes one of a power variance or a power deviation, which is not limited.

In an embodiment, the power parameter between two adjacent first-type subcarriers is less than a preset power parameter threshold, avoiding a large power change between two adjacent first-type subcarriers, thus avoiding a large reduction in the effective correlation bandwidth of an sensing signal, and thereby ensuring the stability of the sensing performance. For example, the preset power parameter threshold may be any value between 0-3 dB.

In an embodiment, the power parameter between two adjacent first-type subcarriers may be the same as or different from that between another two adjacent first-type subcarriers. For example, assuming that the first-type subcarrier set includes subcarrier 2, subcarrier 4, subcarrier 6, and subcarrier 8, then the power parameter between subcarrier 2 and subcarrier 4 may be the same as or different from that between subcarrier 4 and subcarrier 6.

In an embodiment, for any of the first-type subcarriers and any of the second-type subcarriers, in response to the first-type subcarrier carrying communication information and the second communication node using a quadrature amplitude modulation (QAM) scheme, the method applied to the first communication node further includes sending a power ratio for the first-type subcarrier and the second-type subcarrier to the second communication node by using dedicated signaling or common signaling. In an embodiment, each time the first communication node schedules resources, if the resources allocated by the first communication node to the second communication node include first-type subcarriers and the second communication node uses the QAM scheme, then the first communication node sends the first-type subcarrier set and the power ratio for the first-type subcarrier and the second-type subcarrier to the second communication node. In an embodiment, all first-type subcarriers in the first-type subcarrier set may have the same power, or the power parameter between two adjacent first-type subcarriers in the first-type subcarrier is less than a preset power parameter threshold, so that the effective correlation bandwidth of an sensing signal can be maximized. In an embodiment, the first communication node sends the first-type subcarrier set and the power ratio for a first-type subcarrier and a second-type subcarrier to the second communication node. The first-type subcarrier may carry communication information by using the QAM scheme like the second-type subcarrier, thereby minimizing the impact of sensing on communication.

In an embodiment, the dedicated signaling includes one of the following: a physical downlink control channel (PDCCH), downlink control information (DCI), a physical downlink shared channel (PDSCH), or a media access control-control element (MAC CE) signaling.

In an embodiment, for any of the first-type subcarriers, in response to a first-type subcarrier carrying communication information and the second communication node using a QAM scheme, the power ratio for the first-type subcarrier and the second-type subcarrier is constant; and the communication information carried in the first-type subcarrier occupies the first two bits, and bits other than the first two bits have a preset value. In an embodiment, the power ratio between first-type subcarriers is constant, which may be understood as that the power ratio (or the absolute value of the difference) between each two first-type subcarriers in the first-type subcarrier set is a constant value or is less than a preset threshold. For example, assuming that the first-type subcarrier set includes subcarrier 1, subcarrier 3, and subcarrier 5, the power of subcarrier 1 is 1, the power of subcarrier 3 is 2, and the power of subcarrier 5 is 4, then the power ratio between subcarrier 1 and subcarrier 3 and the power ratio between subcarrier 5 and subcarrier 3 are both 2. In an embodiment, to reduce the impact on the communication performance, in the QAM modulation scheme, in the case where the first-type subcarrier carries communication information, only the first two bits may be occupied, and other bits have a preset value, so that the QAM modulation scheme can be equivalent to the quadrature phase-shift keying (QPSK) modulation scheme. The preset value of other bits may be 1.

In an embodiment, FIG. 2 is another flowchart of a communication method according to embodiments of the present application. This embodiment may be implemented by a second communication node. The second communication node may be a terminal, for example, a user equipment (UE). As shown in FIG. 2, the communication method of this embodiment includes S210 and S220.

In S210, a first-type subcarrier set and a second-type subcarrier set that are sent by the first communication node are received.

Each first-type subcarrier in the first-type subcarrier set is in the same resource block as at least one second-type subcarrier in the second-type subcarrier set. The first-type subcarrier in the first-type subcarrier set is configured for transmission of integrated communication and sensing information. The second-type subcarrier in the second-type subcarrier set is configured for transmission of communication information.

In S220, information is transmitted according to the first-type subcarrier in the first-type subcarrier set and the second-type subcarrier in the second-type subcarrier set.

In an embodiment, after determining the first-type subcarrier set and the second-type subcarrier set, the first communication node sends the first-type subcarrier set and the second-type subcarrier set to the second communication node; and after receiving the first-type subcarrier set and the second-type subcarrier set, the second communication node transmits communication information and sensing information based on the first-type subcarrier or transmits communication information by using the second-type subcarrier.

In an embodiment, each of the first-type subcarrier and the second-type subcarrier is configured to be allocated in one of the following manners: equally spaced allocation, unequally spaced allocation, or time-varying allocation.

In an embodiment, receiving the first-type subcarrier set and the second-type subcarrier set that are sent by the first communication node includes receiving the first-type subcarrier set and the second-type subcarrier set that are sent by the first communication node using dedicated signaling or common signaling.

In an embodiment, in response to the first-type subcarrier carrying the communication information, the method applied to the second communication node further includes receiving a power parameter of first-type subcarriers sent by the first communication node using dedicated signaling or common signaling. The power parameter is less than a preset power parameter threshold.

In an embodiment, the power parameter includes one of a power variance or a power deviation.

In an embodiment, in response to the first-type subcarrier carrying communication information and the second communication node using the QAM scheme, the communication method applied to the second communication node further includes receiving a power ratio for the first-type subcarrier and the second-type subcarrier that is sent by the first communication node using dedicated signaling or common signaling.

In an embodiment, the dedicated signaling includes one of the following: a PDCCH, DCI, a PDSCH, or MAC CE signaling.

In an embodiment, in response to the first-type subcarrier carrying communication information and the second communication node using a QAM scheme, a power ratio for the first-type subcarrier and the second-type subcarrier is constant; and the communication information carried in the first-type subcarrier occupies the first two bits, and bits other than the first two bits have a preset value.

For explanation of parameters such as the first-type subcarrier set, the power parameter between first-type subcarriers, the preset power parameter threshold, the power ratio, and the allocation mode of the first-type subcarriers in the communication method applied to the second communication node, see description of corresponding parameters in the communication method applied to the first communication node. The details are not described here again.

In an embodiment, FIG. 3 is another flowchart of a communication method according to embodiments of the present application. This embodiment may be implemented by a first communication node. The first communication node may be a base station. As shown in FIG. 3, the communication method of this embodiment includes S310 and S320.

In S310, a target symbol for sending a first-type signal is determined.

The first-type signal is an integrated communication and sensing signal.

In an embodiment, the first-type signal is a signal that may be used for both sensing and communication, that is, an integrated communication and sensing signal. In an embodiment, the first communication node may select at least one symbol from a slot in the switch between the uplink and the downlink (that is, a slot between a downlink slot and an uplink slot) to serve as the target symbol for transmission of the first-type signal.

In S320, the first-type signal is sent to a second communication node by using the target symbol.

In practical use, after determining the target symbol, the first communication node may send the first-type signal to the second communication node by using the target symbol. In an embodiment, an sensing signal receiver may receive a target echo signal by using the guard period of a special subframe, thereby extending the function of the guard period and reducing the overheads of the sensing signal without affecting the function of the guard period on the communication signal.

In an embodiment, in response to the first communication node being in a long-term evolution (LTE) time-division duplex (TDD) integrated communication and sensing system, the target symbol includes the last K symbols of a downlink pilot time slot (DwPTS); and in response to the first communication node being in an NR TDD integrated communication and sensing system, the target symbol includes the last K symbols of downlink symbols in a slot. K is a positive integer greater than or equal to 1.

In an embodiment, in response to the first communication node being in an LTE TDD integrated communication and sensing system, the first communication node may send the first-type signal on the last K symbols of a DwPTS in a special subframe; and in response to the first communication node being in an NR TDD integrated communication and sensing system, the first communication node may send the first-type signal on the last K symbols of downlink symbols in a slot.

In an embodiment, FIG. 4 is another flowchart of a communication method according to embodiments of the present application. This embodiment may be implemented by a second communication node. The second communication node may be a UE. As shown in FIG. 4, this embodiment includes S410.

In S410, a first-type signal sent by a first communication node by using a target symbol is received.

The first-type signal is an integrated communication and sensing signal. The target symbol is a symbol for sending the first-type signal.

In an embodiment, in response to the first communication node being in an LTE TDD integrated communication and sensing system, the target symbol includes the last K symbols of a DwPTS; and in response to the first communication node being in an NR TDD integrated communication and sensing system, the target symbol includes the last K symbols of downlink symbols in a slot. K is a positive integer greater than or equal to 1.

For explanation of parameters such as the target symbol and the first-type signal in the communication method applied to the second communication node, see description of corresponding parameters in the communication method applied to the first communication node. The details are not described here again.

In an embodiment, the first communication node is a base station, the second communication node is a UE, the power parameter is a power variance, and the base station allocates the first-type subcarriers (that is, subcarriers used for integrated sensing and communication) by using the equally spaced allocation mode, that is, the first-type subcarriers are equally spaced in the frequency domain.

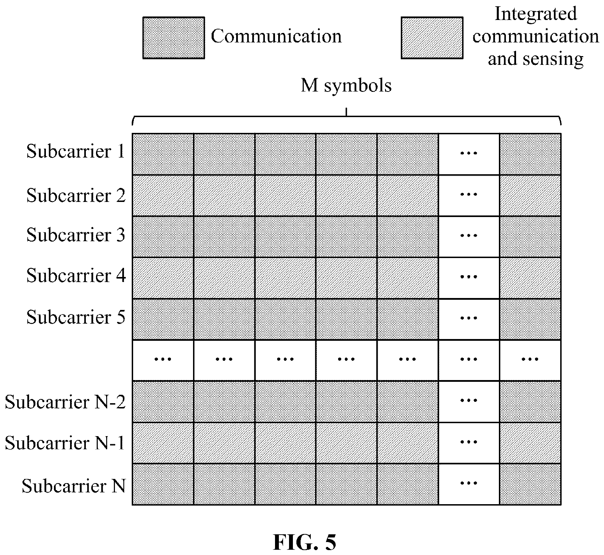

In an embodiment, the base station allocates some subcarriers (that is, the second-type subcarriers) for communication and other subcarriers (that is, the first-type subcarriers) for integrated sensing and communication. The base station notifies, by using dedicated signaling or common signaling, the UE of a subcarrier set (that is, the first-type subcarrier set) used for integrated sensing and communication. For example, the base station may use dedicated signaling to notify some subcarriers (that constitutes a subcarrier set) for sensing. This set may be in the same resource block as subcarriers (that is, the second-type subcarriers in the second-type subcarrier set) allocated to the UE for the UE to perform communication. For another example, the base station may use common signaling to notify the whole subcarrier set used for sensing. The power variance between first-type subcarriers should be less than a preset power variance threshold. In an embodiment, the preset power variance threshold may be set to a value between 0 dB and 3 dB (this threshold is not required to be notified to the UE). FIG. 5 is an allocation diagram of first-type subcarriers and second-type subcarriers according to embodiments of the present application. As shown in FIG. 5, subcarriers whose sequence number is an even number are selected as first-type subcarriers (for example, subcarrier 2, subcarrier 4, subcarrier 6, ..., and subcarrier N - 1), and the first-type subcarriers are equally spaced. N is an even number.

In an embodiment, the first communication node is a base station, the second communication node is a UE, the power parameter is a power variance, and the base station allocates the first-type subcarriers (that is, subcarriers used for integrated sensing and communication) by using the unequally spaced allocation mode.

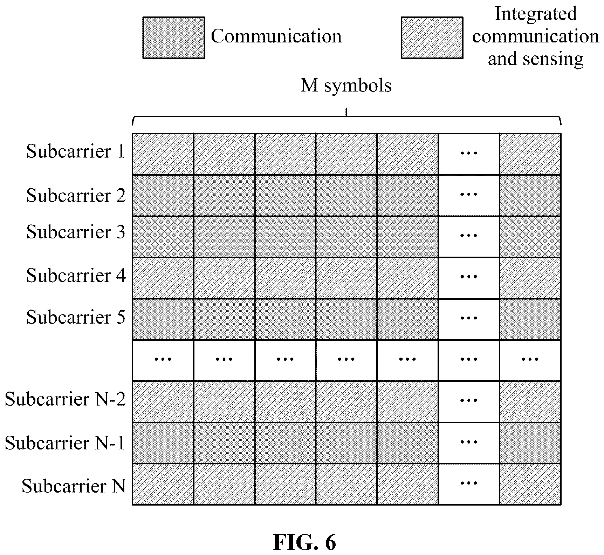

In an embodiment, the base station allocates some subcarriers (that is, the second-type subcarriers) for communication and other subcarriers (that is, the first-type subcarriers) for integrated sensing and communication. The base station notifies, by using dedicated signaling or common signaling, the UE of a subcarrier set (that is, the first-type subcarrier set) used for integrated sensing and communication. In an embodiment, the power variance between first-type subcarriers should be less than a preset power variance threshold. In an embodiment, the preset power variance threshold may be set to a value between 0 dB and 3 dB (this threshold is not required to be notified to the UE). FIG. 6 is another allocation diagram of the first-type subcarriers and the second-type subcarriers according to embodiments of the present application. As shown in FIG. 6, the first-type subcarriers are unequally spaced. For example, the first-type subcarriers are subcarrier 1, subcarrier 4, ..., subcarrier N - 2, and subcarrier N, subcarrier 1 is two subcarriers apart from subcarrier 4, and subcarrier N - 2 is one subcarrier apart from subcarrier N. N is a positive integer greater than 1.

In an embodiment, the first communication node is a base station, the second communication node is a UE, the power parameter is a power variance, and the base station allocates the first-type subcarriers (that is, subcarriers used for integrated sensing and communication) by using the time-varying allocation mode.

In an embodiment, the base station allocates different subcarriers in different slots to serve as first-type subcarriers by using the time-varying allocation mode. The power variance between the first-type subcarriers is less than a preset power variance threshold and is notified to the UE by broadcast.

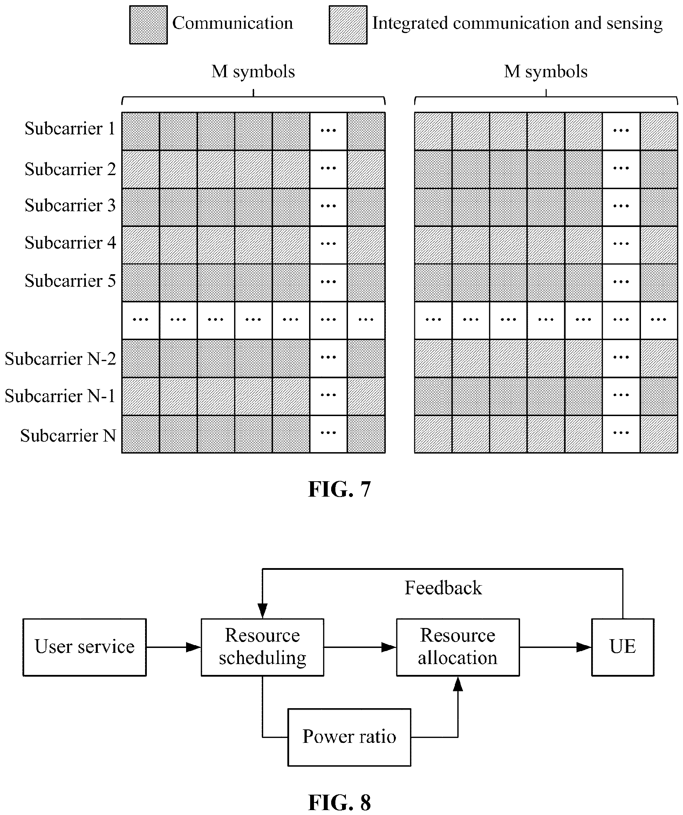

In an embodiment, the base station allocates some subcarriers (that is, the second-type subcarriers) for communication and other subcarriers (that is, the first-type subcarriers) for integrated sensing and communication. The base station notifies, by using dedicated signaling or common signaling, the UE of a subcarrier set (that is, the first-type subcarrier set) used for integrated sensing and communication. The power variance between first-type subcarriers should be less than the preset power variance threshold. In an embodiment, the preset power variance threshold may be set to a value between 0 dB and 3 dB (this threshold is not required to be notified to the UE). FIG. 7 is another allocation diagram of the first-type subcarriers and the second-type subcarriers according to embodiments of the present application. As shown in FIG. 7, the base station allocates different subcarriers in different slots to serve as first-type subcarriers and notifies the subcarriers to the UE by using dedicated signaling or common signaling. For example, in slot t1, subcarrier 2, subcarrier 4, ..., and subcarrier N - 1 are used as first-type subcarriers; and in slot t2, subcarrier 1, subcarrier 4, ..., and subcarrier N - 1 are used as first-type subcarriers.

In an embodiment, the first communication node is a base station, the second communication node is a UE, the power parameter is a power variance, the base station sends the power ratio for a first-type subcarrier and a second-type subcarrier to the UE, and the UE uses the QAM modulation scheme. FIG. 8 is an allocation diagram of downlink resources according to embodiments of the present application. As shown in FIG. 8, the base station allocates frequency-domain resources to the UE. The process of allocation of downlink resources by the base station refers to the process of allocation of subcarriers to the UE. This process includes the following steps: user service, resource scheduling, resource allocation, and feedback. In the resource scheduling process, the power ratio may be sent to the UE.

In an embodiment, the base station notifies the UE of the power ratio for a first-type subcarrier (an integrated communication and sensing subcarrier) and a second-type subcarrier (that is, a pure communication subcarrier) by using dedicated signaling or common signaling.

In an embodiment, the frequency-domain resources allocated by the base station include integrated communication and sensing subcarriers and pure communication subcarriers. In one OFDM symbol time, the integrated communication and sensing subcarriers have the same power, or the power variances of the integrated communication and sensing subcarriers are less than a preset power variance threshold, that is, the integrated communication and sensing subcarriers and the pure communication subcarriers have different powers. Each time the base station schedules resources, if the resources allocated by the base station to the UE includes integrated communication and sensing subcarriers and the UE uses the QAM modulation scheme (for example, 16QAM, 64QAM, and 256QAM), then the base station notifies the UE of an integrated communication and sensing subcarrier set (that is, the first-type subcarrier set) and the power ratio for a first-type subcarrier in the set and a pure communication subcarrier. In this manner, since all integrated communication and sensing subcarriers have the same power or the power variances of these subcarriers are less than a preset power variance threshold, the effective correlation bandwidth of an sensing signal can be maximized from a sensing perspective. On the other hand, by notifying the UE of the first-type subcarrier set and the power ratio for a first-type subcarrier in the set and a pure communication subcarrier, the integrated communication and sensing subcarrier may carry communication information by using the QAM scheme like a traditional communication subcarrier, thereby minimizing the impact of sensing on communication.

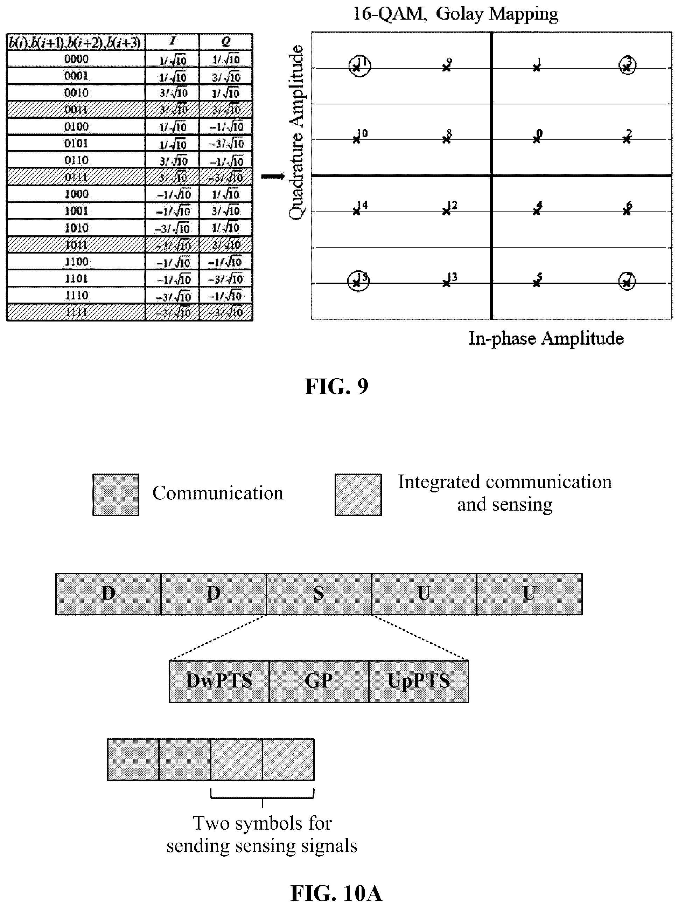

In an embodiment, the first communication node is a base station, the second communication node is a UE, the power parameter is a power variance, the power ratio for a first-type subcarrier and a second-type subcarrier is constant, and the UE uses the 16QAM modulation scheme. FIG. 9 is a diagram illustrating a 16QAM scheme according to embodiments of the present application.

In an embodiment, the frequency-domain resources allocated by the base station include integrated communication and sensing subcarriers (that is, first-type subcarriers) and pure communication subcarriers (that is, second-type subcarriers), and the power ratio for the integrated communication and sensing subcarriers is constant, or the power variances of these subcarriers are less than a preset power variance threshold. This may be understood as that the power of an integrated communication and sensing subcarrier is different from the power of a pure communication subcarrier. To reduce the impact on the communication performance, in the QAM modulation scheme, in the case where the integrated communication and sensing subcarrier carries communication information, only the first two bits may be occupied, and other bits have a preset value (for example, the preset value is 1), so that the QAM modulation scheme can be equivalent to the QPSK modulation scheme. FIG. 9 is used as an example for description. In FIG. 9, the modulation scheme is 16QAM, the communication information carried in the first-type subcarrier occupies the first two bits, bits other than the first two bits have a preset value, and it is specified that the last two bits are 11. That is, when the integrated communication and sensing subcarrier carries communication information, the constellation point corresponding to the modulation is one of the four constellation points 3, 7, 11, and 15 in the drawing. This is equivalent to the QPSK modulation scheme. The same goes to other QAM schemes. The details are not described here.

In this manner, the effective correlation bandwidth of an sensing signal can be maximized, and the impact of sensing on communication can be minimized. Compared with the preceding embodiment of notifying the UE of the power ratio for a first-type subcarrier and a second-type subcarrier, this method does not require to notify the UE of the power ratio for an integrated communication and sensing subcarrier and a pure communication subcarrier by using dedicated signaling.

In an embodiment, the first communication node is a base station, the second communication node is a UE, and the base station allocates a target symbol to a first-type signal. The first-type signal refers to a signal used for sensing, that is, an sensing signal.

In an embodiment, the base station may use the last K symbols of the DwPTS in the special subframe S to perform sensing. K is less than or equal to the number of symbols included in the DwPTS.

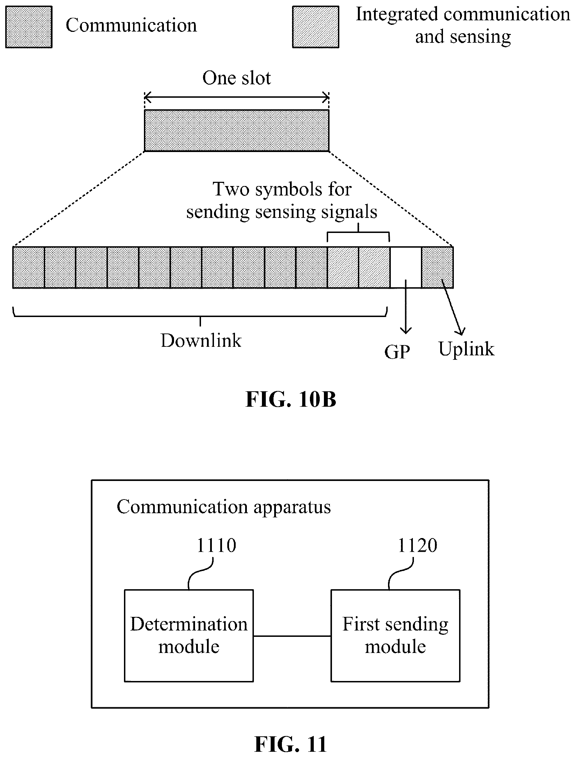

FIG. 10A is an allocation diagram of target symbols according to embodiments of the present application. As shown in FIG. 10A, an sensing signal is sent by using the last two symbols of the DwPTS. D indicates a downlink subframe, S indicates an uplink subframe, and U indicates an uplink subframe. In an LTE TDD integrated communication and sensing system, an sensing signal is sent on the last K symbols of the DwPTS in the special subframe S, where K ≥ 1. FIG. 10B is another allocation diagram of the target symbols according to embodiments of the present application. As shown in FIG. 10B, an sensing signal is sent by using the last two symbols of the downlink symbols in a slot. GP indicates a guard period. In an NR TDD integrated communication and sensing system, an sensing signal is sent on the last K symbols of the downlink symbols of a slot in the switch between the uplink and the downlink, where K ≥ 1.

In this manner, an sensing signal receiver may receive a target echo signal by using the guard period of a special subframe, thereby extending the function of the guard period (GP) and reducing the overheads of the sensing signal without affecting the function of the guard period on the communication signal.

In an embodiment, FIG. 11 is a block diagram of a communication apparatus according to embodiments of the present application. This embodiment is applied to a first communication node. As shown in FIG. 11, the communication apparatus of this embodiment includes a determination module 1110 and a first sending module 1120.

The determination module 1110 is configured to determine a first-type subcarrier set and a second-type subcarrier set, where each first-type subcarrier in the first-type subcarrier set is in the same resource block as at least one second-type subcarrier in the second-type subcarrier set, the first-type subcarrier in the first-type subcarrier set is configured for transmission of communication information and sensing information, and the second-type subcarrier in the second-type subcarrier set is configured for transmission of communication information.

The first sending module 1120 is configured to send the first-type subcarrier set and the second-type subcarrier set to a second communication node.

In an embodiment, each of the first-type subcarrier and the second-type subcarrier is configured to be allocated in one of the following manners: equally spaced allocation, unequally spaced allocation, or time-varying allocation.

In an embodiment, the first-type subcarrier set and the second-type subcarrier set are sent to the second communication node by using a dedicated signaling or a common signaling.

In an embodiment, in response to the first-type subcarrier carrying communication information, the communication apparatus applied to the first communication node further includes a second sending module configured to send the power parameter of the first-type subcarriers to the second communication node by using dedicated signaling or common signaling. The power parameter is less than a preset power parameter threshold.

In an embodiment, the power parameter includes one of a power variance or a power deviation.

In an embodiment, in response to the first-type subcarrier carrying communication information and the second communication node using the quadrature amplitude modulation (QAM) scheme, the communication apparatus applied to the first communication node further includes a third sending module configured to send a power ratio for the first-type subcarrier and the second-type subcarrier to the second communication node by using dedicated signaling or common signaling.

In an embodiment, the dedicated signaling includes one of the following: a physical downlink control channel (PDCCH), downlink control information (DCI), a physical downlink shared channel (PDSCH), or media access control-control element (MAC CE) signaling.

In an embodiment, in response to the first-type subcarrier carrying communication information and the second communication node using a QAM scheme, a power ratio for the first-type subcarrier and the second-type subcarrier is constant; and the communication information carried in the first-type subcarrier occupies the first two bits, and bits other than the first two bits have a preset value.

The communication apparatus of this embodiment is configured to perform the communication method applied to the first communication node according to the embodiment shown in FIG. 1. The implementation principles and technical effects of this apparatus are similar to those of the communication method applied to the first communication node and thus are not described here.

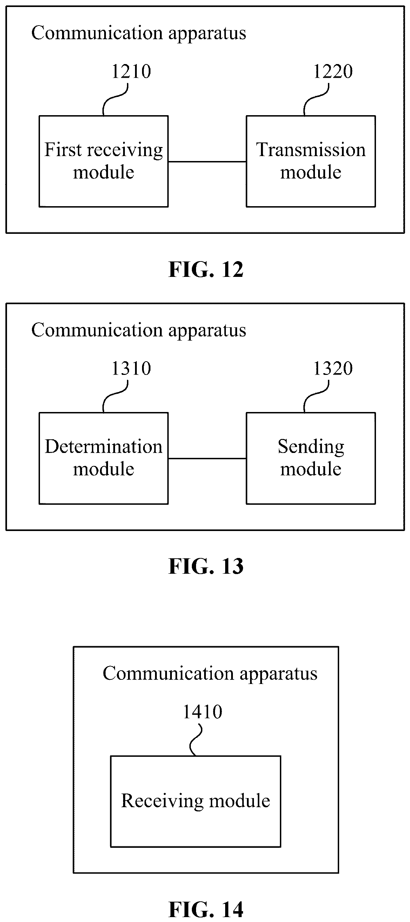

In an embodiment, FIG. 12 is a block diagram of another communication apparatus according to embodiments of the present application. This embodiment is applied to a second communication node. As shown in FIG. 12, the communication apparatus of this embodiment includes a first receiving module 1210 and a transmission module 1220.

The first receiving module 1210 is configured to receive a first-type subcarrier set and a second-type subcarrier set, where the first-type subcarrier set and the second-type subcarrier set are sent by a first communication node, each first-type subcarrier in the first-type subcarrier set is in the same resource block as at least one second-type subcarrier in the second-type subcarrier set, the first-type subcarrier in the first-type subcarrier set is configured for transmission of integrated communication and sensing information, and the second-type subcarrier in the second-type subcarrier set is configured for transmission of communication information.

The transmission module 1220 is configured to transmit information according to the first-type subcarrier in the first-type subcarrier set and the second-type subcarrier in the second-type subcarrier set.

In an embodiment, each of the first-type subcarrier and the second-type subcarrier is configured to be allocated in one of the following manners: equally spaced allocation, unequally spaced allocation, or time-varying allocation.

In an embodiment, the first receiving module 1210 is further configured to receive the first-type subcarrier set and the second-type subcarrier set that are sent by the first communication node using dedicated signaling or common signaling.

In an embodiment, in response to the first-type subcarrier carrying communication information, the communication apparatus applied to the second communication node further includes a second receiving module configured to receive the power parameter of the first-type subcarriers in the first-type subcarrier set sent by the first communication node using dedicated signaling or common signaling. Where the power parameter is less than a preset power parameter threshold.

In an embodiment, the power parameter includes one of a power variance or a power deviation.

In an embodiment, in response to the first-type subcarrier carrying communication information and the second communication node using the QAM scheme, the communication apparatus applied to the second communication node further includes a third receiving module configured to receive the power ratio for the first-type subcarrier and the second-type subcarrier that is sent by the first communication node using dedicated signaling or common signaling.

In an embodiment, the dedicated signaling includes one of the following: a PDCCH, DCI, a PDSCH, or a MAC CE signaling.

In an embodiment, in response to the first-type subcarrier carrying communication information and the second communication node using a QAM scheme, the power ratio for the first-type subcarrier and the second-type subcarrier is constant; and the communication information carried in the first-type subcarrier occupies first two bits, and bits other than the first two bits have a preset value.

The communication apparatus of this embodiment is configured to perform the communication method applied to the second communication node according to the embodiment shown in FIG. 2. The implementation principles and technical effects of this apparatus are similar to those of the communication method applied to the second communication node and thus are not described here.

In an embodiment, FIG. 13 is a block diagram of another communication apparatus according to embodiments of the present application. This embodiment is applied to a first communication node. As shown in FIG. 13, the communication apparatus of this embodiment includes a determination module 1310 and a sending module 1320.

The determination module 1310 is configured to determine a target symbol for sending a first-type signal. The first-type signal is an integrated communication and sensing signal.

The sending module 1320 is configured to send the first-type signal to a second communication node by using the target symbol.

In an embodiment, in response to the first communication node being in an LTE TDD integrated communication and sensing system, the target symbol includes the last K symbols of a DwPTS; and in response to the first communication node being in an NR TDD integrated communication and sensing system, the target symbol includes the last K symbols of downlink symbols in a slot. K is a positive integer greater than or equal to 1.

The communication apparatus of this embodiment is configured to perform the communication method applied to the first communication node according to the embodiment shown in FIG. 3. The implementation principles and technical effects of this apparatus are similar to those of the communication method applied to the first communication node and thus are not described here.

In an embodiment, FIG. 14 is a block diagram of another communication apparatus according to embodiments of the present application. This embodiment is applied to a second communication node. As shown in FIG. 14, the communication apparatus of this embodiment includes a receiving module 1410.

The receiving module 1410 is configured to receive a first-type signal sent by a first communication node by using a target symbol. The first-type signal is an integrated communication and sensing signal. The target symbol is a symbol for sending the first-type signal.

In an embodiment, in response to the first communication node being in an LTE TDD integrated communication and sensing system, the target symbol includes the last K symbols of a DwPTS; and in response to the first communication node being in an NR TDD integrated communication and sensing system, the target symbol includes the last K symbols of downlink symbols in a slot. K is a positive integer greater than or equal to 1.

The communication apparatus of this embodiment is configured to perform the communication method applied to the second communication node according to the embodiment shown in FIG. 4. The implementation principles and technical effects of this apparatus are similar to those of the communication method applied to the second communication node and thus are not described here.

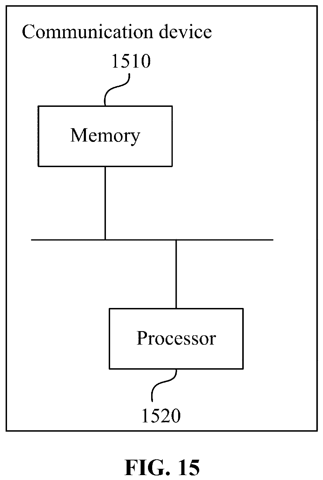

FIG. 15 is a diagram illustrating the structure of a communication device according to embodiments of the present application. As shown in FIG. 15, the device of the present application includes a processor 1510 and a memory 1520. One or more processors 1510 may be configured in the device. FIG. 15 uses one processor 1510 as an example. One or more memories 1520 may be configured in the device. FIG. 15 uses one memory 1520 as an example. The processor 1510 and memory 1520 of the device are connected by a bus or in other manners. The connection by a bus is taken as an example in FIG. 15. In this embodiment, the device may be the first communication node.

As a computer-readable storage medium, the memory 1520 may be configured to store software programs and computer-executable programs and modules, such as program instructions/modules (for example, the determination module 1110 and the first sending module 1120 in the communication apparatus) corresponding to the device according to any embodiment of the present application. The memory 1520 may include a program storage region and a data storage region. The program storage region may store an operating system and an application program required by at least one function. The data storage region may store data created according to the use of the device. Additionally, the memory 1520 may include a high-speed random-access memory or a nonvolatile memory such as at least one disk memory, a flash memory, or another nonvolatile solid-state memory. In some examples, the memory 1520 may also include memories remotely disposed relative to the processor 1510, and these remote memories may be connected to the device via a network. Examples of the preceding network include, but are not limited to, the Internet, an intranet, a local area network, a mobile communication network, and a combination thereof.

In the case where the communication device is the first communication node, the device may be configured to perform the communication method applied to the first communication node according to any preceding embodiment and has corresponding functions and effects.

In the case where the communication device is the second communication node, the device may be configured to perform the communication method applied to the second communication node according to any preceding embodiment and has corresponding functions and effects.

Embodiments of the present application further provide a storage medium including computer-executable instructions. When the computer-executable instructions are executed by a computer processor, the computer processor performs a communication method applied to a first communication node. The method includes determining a first-type subcarrier set and a second-type subcarrier set, where each first-type subcarrier in the first-type subcarrier set is in the same resource block as at least one second-type subcarrier in the second-type subcarrier set, the first-type subcarrier in the first-type subcarrier set is configured for transmission of communication information and sensing information, and the second-type subcarrier in the second-type subcarrier set is configured for transmission of communication information; and sending the first-type subcarrier set and the second-type subcarrier set to a second communication node.

Embodiments of the present application further provide a storage medium including computer-executable instructions. When the computer-executable instructions are executed by a computer processor, the computer processor performs a communication method applied to a second communication node. The method includes receiving a first-type subcarrier set and a second-type subcarrier set, where the first-type subcarrier set and the second-type subcarrier set are sent by a first communication node, each first-type subcarrier in the first-type subcarrier set is in the same resource block as at least one second-type subcarrier in the second-type subcarrier set, the first-type subcarrier in the first-type subcarrier set is configured for transmission of communication information and sensing information, and the second-type subcarrier in the second-type subcarrier set is configured for transmission of communication information; and transmitting information according to the first-type subcarriers in the first-type subcarrier set and the second-type subcarriers in the second-type subcarrier set.

Embodiments of the present application further provide a storage medium including computer-executable instructions. When the computer-executable instructions are executed by a computer processor, the computer processor performs a communication method applied to a first communication node. The method includes determining a target symbol for sending a first-type signal, where the first-type signal is an integrated communication and sensing signal; and sending the first-type signal to a second communication node by using the target symbol.

Embodiments of the present application further provide a storage medium including computer-executable instructions. When the computer-executable instructions are executed by a computer processor, the computer processor performs a communication method applied to a second communication node. The method includes receiving a first-type signal sent by a first communication node by using a target symbol. The first-type signal is an integrated communication and sensing signal. The target symbol is a symbol for sending the first-type signal.

It is to be understood by those skilled in the art that the term "user equipment" encompasses any suitable type of wireless user equipment, for example, a mobile phone, a portable data processing apparatus, a portable web browser or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A communication method, the method being applied to a first communication node and comprising:
determining a first-type subcarrier set and a second-type subcarrier set, wherein each first-type subcarrier in the first-type subcarrier set is in a same resource block as at least one second-type subcarrier in the second-type subcarrier set, a first-type subcarrier in the first-type subcarrier set is configured for transmission of communication information and sensing information, and a second-type subcarrier in the second-type subcarrier set is configured for the transmission of the communication information; and
sending the first-type subcarrier set and the second-type subcarrier set to a second communication node.

2. The method of claim 1, wherein each of the first-type subcarrier and the second-type subcarrier is configured to be allocated in one of the following manners: equally spaced allocation, unequally spaced allocation, or time-varying allocation.

3. The method of claim 1, wherein sending the first-type subcarrier set and the second-type subcarrier set to the second communication node comprises:
sending the first-type subcarrier set and the second-type subcarrier set to the second communication node by using dedicated signaling or common signaling.

4. The method of claim 1, wherein in response to the first-type subcarrier carrying the communication information, the method further comprises:
sending a power parameter of first-type subcarriers in the first-type subcarrier set to the second communication node by using dedicated signaling or common signaling, wherein the power parameter is less than a preset power parameter threshold.

5. The method of claim 4, wherein the power parameter comprises one of a power variance or a power deviation.

6. The method of claim 1, wherein in response to the first-type subcarrier carrying communication information and the second communication node using a quadrature amplitude modulation, QAM, scheme, the method further comprises:
sending a power ratio for the first-type subcarrier and the second-type subcarrier to the second communication node by using dedicated signaling or common signaling.

7. The method of claim 3, 4, or 6, wherein the dedicated signaling comprises one of the following: a physical downlink control channel, PDCCH, downlink control information, DCI, a physical downlink shared channel, PDSCH, or media access control-control element, MAC CE, signaling.

8. The method of claim 1, wherein in response to the first-type subcarrier carrying communication information and the second communication node using a QAM scheme, a power ratio for the first-type subcarrier and the second-type subcarrier is constant; and
the communication information carried in the first-type subcarrier occupies first two bits, and bits other than the first two bits have a preset value.

9. A communication method, the method being applied to a second communication node and comprising:
receiving a first-type subcarrier set and a second-type subcarrier set sent by a first communication node, wherein each first-type subcarrier in the first-type subcarrier set is in a same resource block as at least one second-type subcarrier in the second-type subcarrier set, the first-type subcarrier in the first-type subcarrier set is configured for transmission of integrated communication and sensing information, and the second-type subcarrier in the second-type subcarrier set is configured for transmission of communication information; and
transmitting information according to the first-type subcarrier in the first-type subcarrier set and the second-type subcarrier in the second-type subcarrier set.

10. A communication method, the method being applied to a first communication node and comprising:
determining a target symbol for sending a first-type signal, wherein the first-type signal is an integrated communication and sensing signal; and
sending the first-type signal to a second communication node by using the target symbol.

11. The method of claim 10, wherein in response to the first communication node being in a long-term evolution, LTE, time-division duplex, TDD, integrated communication and sensing system, the target symbol comprises last K symbols of a downlink pilot time slot, DwPTS,; and
in response to the first communication node being in a New Radio, NR, TDD integrated communication and sensing system, the target symbol comprises last K symbols of downlink symbols in a slot;
wherein K is a positive integer greater than or equal to 1.

12. A communication method, the method being applied to a second communication node and comprising:
receiving a first-type signal sent by a first communication node by using a target symbol, wherein the first-type signal is an integrated communication and sensing signal, and the target symbol is a symbol for sending the first-type signal.

13. A communication device, comprising a memory and at least one processor, wherein
the memory is configured to store at least one program; and
when the at least one program is executed by the at least one processor, the at least one processor performs the method of any one of claims 1 to 8, claim 9, claims 10 to 11, and claim 12.

14. A storage medium storing a computer program which, when executed by a processor, causes the processor to perform the method of any one of claims 1 to 8, claim 9, claims 10 to 11, or claim 12.
